# EUROPEAN PATENT SPECIFICATION

(11) **EP 3 809 630 B1**
(45) Date of publication and mention of the grant of the patent: **20.03.2024**
(21) Application number: 18932118.5
(22) Date of filing: 27.08.2018
(51) Int. Cl.: H04L 12/02, H04L 27/00, H04B 7/02, H04B 3/50, H04B 3/00, H04B 3/02

(54) **COMMUNICATION DEVICE, AND SYSTEM AND METHOD THEREFOR**
KOMMUNIKATIONSVORRICHTUNG SOWIE SYSTEM UND VERFAHREN DAFÜR
DISPOSITIF DE COMMUNICATION, ET SYSTÈME ET PROCÉDÉ ASSOCIÉS

(43) Date of publication of application: 21.04.2021
(73) Proprietor: HUAWEI TECHNOLOGIES CO., LTD., Shenzhen, Guangdong 518129 (CN)
(72) Inventor: ZHAO, Zhilei, Shenzhen, Guangdong 518129 (CN)
(74) Representative: Maiwald GmbH
(86) International application number: PCT/CN2018/102474
(87) International publication number: WO 2020/041926

(56) References cited:
- EP-A1- 3 278 460
- EP-B1- 3 278 460
- WO-A1-2012/126845
- CN-A- 102 725 655
- CN-A- 108 337 095
- US-A1- 2005 013 379
- US-A1- 2013 003 873
- US-A1- 2016 381 643

## Description

### TECHNICAL FIELD

This application relates to the field of communications technologies, and in particular, to a communications apparatus, a communications system, and a communication method.

### BACKGROUND

An x digital subscriber line (x Digital Subscriber Line, xDSL) is a generic term for various types of digital subscriber lines, and is also a transmission technology. In the transmission technology, a relatively high frequency and a corresponding modulation technology, that is, a signal processing technology in which more digital data are added to or obtained from an analog line, are used on an existing copper telephone line, to obtain a high transmission rate. An xDSL service rate is closely related to a distance from a central office (central office, CO) (which may also be referred to as a central office device) to customer-premises equipment (customer-premises equipment, CPE). In other words, the xDSL service rate is closely related to a length of a transmission medium. For example, the xDSL service rate is closely related to a length of a twisted pair. A longer distance leads to severer signal attenuation, and accordingly a service rate is lower. With the development of services such as videos and games, how to reduce impact of long-range communication on a service rate is a technical problem that needs to be urgently resolved.

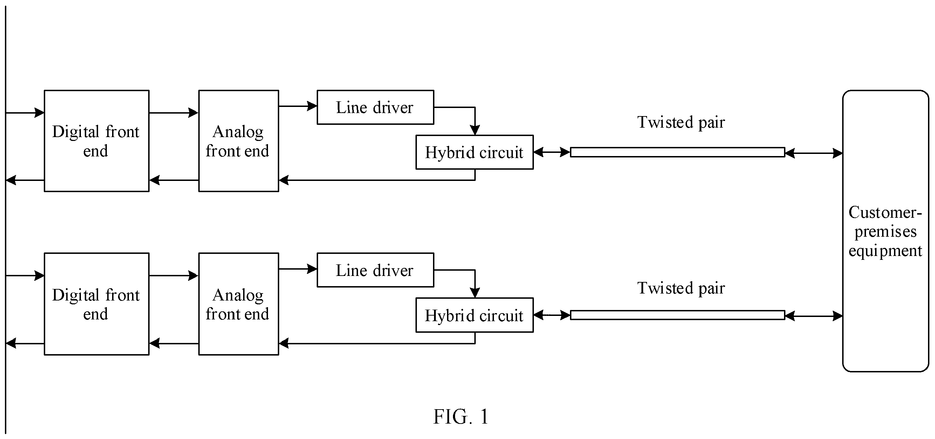

Currently, in a scenario of two twisted pairs to a home, a bonding (bonding) method is usually used to reduce impact of long-range communication on a service rate. For the bonding method, refer to FIG. 1. Two DSL ports are used to transmit signals respectively on two twisted pairs, and rates can be added up through bonding. One DSL port includes one digital front end (digital front end, DFE), one analog front end (analog front end, AFE), one line driver (line driver, LD), and one hybrid circuit.

The bonding method shown in FIG. 1 can reduce impact of long-range communication on a service rate, but two DSL ports are required. In a scenario of more than two twisted pairs to a home, more than two DSL ports are required. In this case, a circuit board on which a DFE is located needs to be changed to support a plurality of DSL ports, and further a plurality of sets of DFEs, AFEs, LDs, and hybrid circuits need to be configured. As a result, device costs are relatively high and a device structure is complex.
European patent application EP 3 278 460 A1 discloses a system for transmitting data between an upstream transceiver and a downstream transceiver via two pairs of wires extending between the transceivers.
United States patent application US 2005/0013379 A1 discloses a technique for improving multiple-channel multi-tone transmissions.

### SUMMARY

To resolve the foregoing technical problem, embodiments of this application provide a communications apparatus, a communications system, and a communication method, to reduce impact of long-range communication on a service rate, reduce device costs, and simplify a device structure.

A first aspect of the embodiments of this application provides a communications apparatus. The communications apparatus is applied to a transceiver, and the communications apparatus includes a digital front end unit and an analog front end drive unit;
a first port of the digital front end unit is configured to receive a first to-be-sent signal, a second port of the digital front end unit is connected to a first port of the analog front end drive unit, and a plurality of second ports of the analog front end drive unit are connected to a plurality of twisted pairs in a one-to-one manner;
the digital front end unit receives the first to-be-sent signal, performs modulation processing on the first to-be-sent signal to obtain a second to-be-sent signal, and sends the second to-be-sent signal to the analog front end drive unit;
the analog front end drive unit performs conversion and duplication processing on the second to-be-sent signal to obtain a plurality of third to-be-sent signals, and sends the plurality of third to-be-sent signals to the plurality of twisted pairs through the plurality of second ports of the analog front end drive unit in a one-to-one manner; and
the plurality of third to-be-sent signals are sent respectively through the plurality of twisted pairs.

According to the communications apparatus provided in the first aspect of the embodiments of this application, the analog front end drive unit performs conversion and duplication processing on the second to-be-sent signal to obtain the plurality of third to-be-sent signals, and sends the plurality of third to-be-sent signals to the plurality of twisted pairs through the plurality of second ports of the analog front end drive unit in a one-to-one manner; and one third to-be-sent signal is sent through one twisted pair. In this way, a voltage of a signal finally received by a receive end is increased, and a signal-to-noise ratio (signal-to-noise ratio, SNR) of the receive end is increased, thereby reducing impact of long-range communication on a service rate, reducing device costs, and simplifying a device structure.

In a possible implementation, the analog front end drive unit includes an analog front end unit and a plurality of line drive units;
a first port of the analog front end unit is connected to the second port of the digital front end unit, a plurality of second ports of the analog front end unit are connected to first ports of the plurality of line drive units in a one-to-one manner, and second ports of the line drive units are connected to the twisted pairs;
the analog front end unit performs digital-to-analog conversion processing and duplication processing on the second to-be-sent signal to obtain a plurality of second to-be-sent signals after the digital-to-analog conversion;
the analog front end unit sends, to the line drive units through the plurality of second ports of the analog front end unit in a one-to-one manner, the second to-be-sent signals obtained after the digital-to-analog conversion processing; and
the line drive units perform amplification processing on the second to-be-sent signals obtained after the digital-to-analog conversion processing, to obtain the third to-be-sent signals.

In this manner, the analog front end unit performs duplication processing, and a drive capability of the line drive unit is the same as a drive capability of a line driver in a solution in which a single DSL port is used. Both an active matching circuit and a passive matching circuit can be applied to this manner.

In a possible implementation, the analog front end drive unit includes an analog front end unit and a line drive unit;
a first port of the analog front end unit is connected to the second port of the digital front end unit, a second port of the analog front end unit is connected to a first port of the line drive unit, and a plurality of second ports of the line drive unit are connected to the plurality of twisted pairs in a one-to-one manner;
the analog front end unit performs digital-to-analog conversion processing on the second to-be-sent signal, and sends a second to-be-sent signal obtained after the digital-to-analog conversion processing to the line drive unit;
the line drive unit performs amplification processing on the second to-be-sent signal obtained after the digital-to-analog conversion processing, to obtain the third to-be-sent signal; and
the line drive unit performs duplication processing on the third to-be-sent signal to obtain the plurality of third to-be-sent signals.

In this manner, the line drive unit performs duplication processing. If there are two twisted pairs, a drive capability of the line drive unit needs to be increased by one time compared with a drive capability of a line driver in a solution in which a single DSL port is used. A passive matching circuit can be applied to this manner.

In a possible implementation, the communications apparatus further includes a summation unit; and
a first port of the summation unit is connected to a third port of the analog front end unit, and second ports of the summation unit are configured to receive a plurality of first to-be-received signals;
the summation unit receives the plurality of first to-be-received signals, and adds up voltages of the plurality of first to-be-received signals to obtain a second to-be-received signal;
the summation unit sends the second to-be-received signal to the analog front end unit;
the analog front end unit performs analog-to-digital conversion processing on the second to-be-received signal to obtain a third to-be-received signal, and sends the third to-be-received signal to the digital front end unit; and
the digital front end unit performs demodulation processing on the third to-be-received signal to obtain a fourth to-be-received signal, and sends the fourth to-be-received signal.

In this manner, the communications apparatus further includes the summation unit, so that the communications apparatus can implement a function of a receiver in addition to a function of a transmitter.

In a possible implementation, if voltages of all the first to-be-received signals are the same, a voltage of the second to-be-received signal is N times the voltage of the first to-be-received signal, where N is a positive integer and is related to a quantity of first to-be-received signals. The voltage of the second to-be-received signal is N times the voltage of the first to-be-received signal, so that the voltage of the signal finally received by the receive end is increased by (N-1) times. This increases a signal-to-noise ratio, thereby reducing impact of long-range communication on a service rate, and increasing a service rate of a long-range user.

In a possible implementation, the communications apparatus further includes a plurality of hybrid units;
the plurality of second ports of the analog front end drive unit are connected to first ports of the plurality of hybrid units in a one-to-one manner, second ports of the hybrid units are connected to the twisted pairs, and third ports of the hybrid units are connected to the second ports of the summation unit;
the analog front end drive unit sends the plurality of third to-be-sent signals to the plurality of hybrid units through the plurality of second ports of the analog front end drive unit in a one-to-one manner; and
the hybrid units send the third to-be-sent signals to the twisted pairs.

In this manner, the communications apparatus further includes the hybrid units, and the hybrid unit is configured to separate a to-be-sent signal from a to-be-received signal, so that the to-be-sent signal can be sent to the twisted pair, the to-be-received signal can be transmitted to the summation unit, and transmission of the to-be-sent signal to the summation unit is prevented. In this way, impact of the to-be-sent signal on the to-be-received signal is reduced.

In a possible implementation, the hybrid unit receives the first to-be-received signal through the twisted pair, and sends the first to-be-received signal to the summation unit.

In a possible implementation, the communications apparatus further includes a plurality of voltage transformation units, and a quantity of voltage transformation units is the same as a quantity of hybrid units; and
a first end of the voltage transformation unit is connected to a second end of the hybrid unit, and a second end of the voltage transformation unit is connected to twisted pair; and the voltage transformation unit is configured to perform voltage transformation processing on the third to-be-sent signals.

In this manner, before the third to-be-sent signal is sent to the twisted pair, voltage transformation processing is performed on the third to-be-sent signal. All the voltage transformation units may perform same voltage transformation processing on the third to-be-sent signals, so that voltages of signals transmitted on all the twisted pairs are the same.

In a possible implementation, a quantity of hybrid units is greater than or equal to a quantity of second ports of the analog front end drive unit, and the quantity of the second ports of the analog front end drive unit is greater than or equal to a quantity of third to-be-sent signals.

A second aspect of the embodiments of this application provides a transceiver. The transceiver includes the communications apparatus provided in the first aspect, and the transceiver can implement both a function of a transmitter and a function of a receiver. The functions of the transmitter and the receiver can be simultaneously implemented, that is, signal sending and receiving can be simultaneously implemented. In this case, a hybrid unit can distinguish between a to-be-sent signal and a to-be-received signal.

A third aspect of the embodiments of this application provides a communications system. The communications system includes two or more communications apparatuses provided in the first aspect and a plurality of twisted pairs. If the communications system includes two communications apparatuses, one communications apparatus is configured to send a signal, the other communications apparatus is configured to receive a signal, and the twisted pair is configured to transmit the signals.

A fourth aspect of the embodiments of this application provides a communication method, where the communication method is applied to a transceiver, and the communication method may include:
receiving a first to-be-sent signal, and performing modulation processing on the first to-be-sent signal to obtain a second to-be-sent signal;
performing conversion and duplication processing on the second to-be-sent signal to obtain a plurality of third to-be-sent signals; and
sending the plurality of third to-be-sent signals respectively through a plurality of twisted pairs.

According to the fourth aspect of the embodiments of this application, modulation processing is performed on the first to-be-sent signal to obtain the second to-be-sent signal; conversion and duplication processing are performed on the second to-be-sent signal to obtain the plurality of third to-be-sent signals; and the plurality of third to-be-sent signals are sent respectively through the plurality of twisted pairs. In this way, a voltage of a signal finally received by a receive end is increased, and a signal-to-noise ratio is increased, thereby reducing impact of long-range communication on a service rate.

In a possible implementation, a plurality of first to-be-received signals are received through the plurality of twisted pairs, and voltages of the plurality of first to-be-received signals are added up to obtain a second to-be-received signal; analog-to-digital conversion processing is performed on the second to-be-received signal to obtain a third to-be-received signal; and demodulation processing is performed on the third to-be-received signal to obtain a fourth to-be-received signal. The voltages of the first to-be-received signals are added up, so that the voltage of the finally received signal is increased. This increases a signal-to-noise ratio, thereby reducing impact of long-range communication on a service rate.

In a possible implementation, digital-to-analog conversion processing, duplication processing, and amplification processing are sequentially performed on the second to-be-sent signal to obtain the plurality of third to-be-sent signals. Digital-to-analog conversion processing is performed first, then duplication processing is performed, and then amplification processing is performed. Both an active matching circuit and a passive matching circuit are applied to this manner.

In a possible implementation, digital-to-analog conversion processing, amplification processing, and duplication processing are sequentially performed on the second to-be-sent signal to obtain the plurality of third to-be-sent signals. Digital-to-analog conversion is performed first, then amplification processing is performed, and then duplication processing is performed. A passive matching circuit is applied to this manner.

In a possible implementation, voltage transformation processing is performed on the plurality of third to-be-sent signals, and a plurality of third to-be-sent signals obtained after the voltage transformation processing are sent respectively through the plurality of twisted pairs. Before the third to-be-sent signals are sent through the twisted pairs, voltage transformation processing is performed on the third to-be-sent signals, so that voltages of signals transmitted on all the twisted pairs are the same.

In a possible implementation, hybrid processing is performed on the plurality of third to-be-sent signals, and a plurality of third to-be-sent signals obtained after the hybrid processing are sent respectively through the plurality of twisted pairs. Before the third to-be-sent signals are sent through the twisted pairs, hybrid processing is performed on the third to-be-sent signals, to separate a to-be-sent signal from a to-be-received signal.

### BRIEF DESCRIPTION OF DRAWINGS

To describe the technical solutions in the embodiments of this application or in the background more clearly, the following briefly describes the accompanying drawings for describing the embodiments of this application or the background.
FIG. 1 is a schematic structural diagram of reducing impact of long-range communication on a service rate by using a bonding method;
FIG. 2 is a schematic diagram of a network architecture to which an embodiment of this application is applied;
FIG. 3 is a schematic structural diagram of a communications apparatus according to Embodiment 1 of this application;
FIG. 4 is a schematic structural diagram of a communications apparatus according to Embodiment 2 of this application;
FIG. 5 is a schematic structural diagram of a communications apparatus according to Embodiment 3 of this application;
FIG. 6 is a schematic structural diagram of a communications apparatus according to Embodiment 4 of this application;
FIG. 7 is a schematic structural diagram of a communications apparatus according to Embodiment 5 of this application; and
FIG. 8 is a schematic flowchart of a communication method according to an embodiment of this application.

### DESCRIPTION OF EMBODIMENTS

The following describes the technical solutions in the embodiments of this application with reference to the accompanying drawings in the embodiments of this application. In the descriptions in this application, unless otherwise specified, "/" indicates an "or" relationship between associated objects. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B each may be in a singular or plural form. In addition, in the descriptions of this application, "a plurality of means two or more than two. "At least one (item) of the following" or a similar expression thereof means any combination of these items, including a singular (item) or any combination of a plural (items). For example, at least one (item) of a, b, or c may represent: a; b; c; a and b; a and c; b and c; or a, b, and c, where a, b, and c each may be in a singular or plural form. In addition, for clear description of the technical solutions in the embodiments of this application, words such as "first" and "second" are used in the embodiments of this application to distinguish between same items with basically same functions and effects or similar items. A person skilled in the art can understand that the words such as "first" and "second" do not limit a quantity and an execution sequence, and the words such as "first" and "second" are not necessarily different.

In view of disadvantages of the bonding method that is shown in FIG. 1 and in which two DSL ports are used, the embodiments of this application provide a communications apparatus, a communications system, and a communication method, to reduce impact of long-range communication on a service rate, reduce device costs, and simplify a device structure.

The communications apparatus provided in the embodiments of this application may be applied to a transceiver. The transceiver may be deployed on a central office (central office, CO) side and a customer-premises equipment (customer-premises equipment, CPE) side. The central office may also be referred to as a central office device.

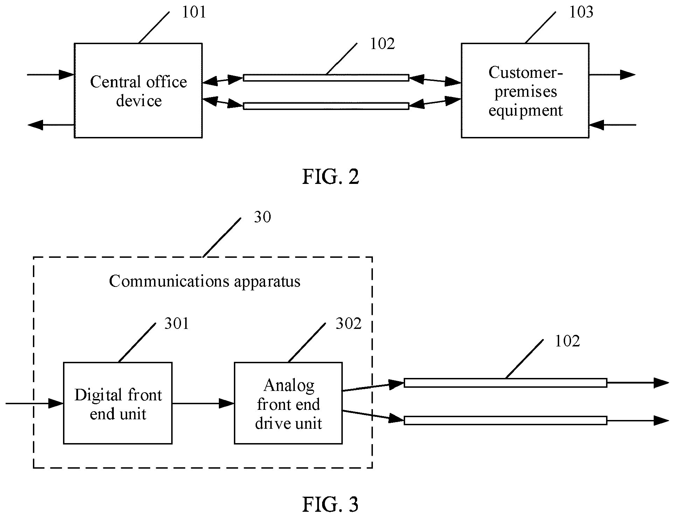

FIG. 2 is a schematic diagram of a network architecture to which an embodiment of this application is applied. In the schematic diagram of the network architecture, a central office device 101, a twisted pair 102, and customer-premises equipment 103 are included. The schematic diagram of the network architecture is described by using two twisted pairs as an example. 102 in FIG. 2 represents one twisted pair. In actual application, two or more twisted pairs may be included in the schematic diagram of the network structure. A case in which there are more than two twisted pairs may be an extension based on a case in which there are two twisted pairs.

When receiving a to-be-sent signal that needs to be sent to the customer-premises equipment, the central office device 101 processes the to-be-sent signal to obtain two processed to-be-sent signals; and sends the two processed to-be-sent signals to the two twisted pairs respectively through two ports, that is, sends one processed to-be-sent signal to one twisted pair through one port, and sends the other processed to-be-sent signal to the other twisted pair through the other port.

When receiving the to-be-sent signal, the twisted pair 102 sends the to-be-sent signal to the customer-premises equipment 103.

When receiving the to-be-sent signal, the customer-premises equipment 103 processes the to-be-sent signal, and may send a processed to-be-sent signal; or may not send the processed to-be-sent signal after processing the to-be-sent signal. Whether the customer-premises equipment 103 sends the processed to-be-sent signal after processing the to-be-sent signal depends on a specific case.

The foregoing process is a scenario in which the central office device 101 sends the to-be-sent signal to the customer-premises equipment 103 through the twisted pair 102. A scenario in which the customer-premises equipment 103 sends a to-be-sent signal to the central office device 101 through the twisted pair 102 is similar to the foregoing process, except that a transmit end and a receive end are different in the two scenarios.

In addition to the network architecture shown in FIG. 2, this embodiment of this application may also be applied to a network architecture for transmission between a relay device and a central office device, and may also be applied to a network architecture for transmission between a relay device and customer-premises equipment, and the like. In other words, this embodiment of this application may be applied to a scenario in which two communications apparatuses perform transmission, where the communications apparatus can implement a function of a transceiver.

A twisted pair is one twisted pair. A twisted pair is a most commonly used transmission medium in integrated wiring engineering. The twisted pair uses a pair of mutually insulated metal conducting wires that are twisted each other to resist some external electromagnetic wave interference. A degree of signal interference can be reduced by twisting two insulated copper conducting wires together according to specific density, and an electric wave radiated by each conducting wire during transmission is canceled by an electric wave emitted by the other conducting wire. Insulated conducting wires that are made of any material and that are twisted together can be referred to as a twisted pair. One cable may include one or more twisted pairs. The twisted pair is usually formed by intertwining two #22-26 copper conducting wires, or may be a single insulated wire made from a plurality of small copper wires. In actual use, a plurality of twisted pairs are wrapped in an insulated cable sleeve. Typical twisted pairs are one, four, or more twisted pairs that are placed in a cable sleeve. These twisted pairs are referred to as twisted pair cables.

For a twisted pair, attenuation (attenuation) is a measurement indicator of a signal loss over a link. The attenuation is related to a cable length. As the length increases, the signal attenuation also increases. The attenuation is expressed in "dB", indicating a ratio of strength of a signal from a transmit end to strength of the signal received by a receive end.

It should be noted that the twisted pair 102 shown in FIG. 2 does not constitute any limitation on this embodiment of this application. In actual application, another transmission medium such as an optical fiber or a coaxial cable may alternatively be used.

FIG. 3 is a schematic structural diagram of a communications apparatus according to Embodiment 1 of this application. The communications apparatus 30 includes a digital front end unit 301 and an analog front end drive unit 302. It should be noted that there is one digital front end unit 301 and one analog front end drive unit 302, and the communications apparatus shown in FIG. 3 is configured to implement a signal sending function.

Ports of the digital front end unit 301 are sequentially a first port and a second port of the digital front end unit 301 from left to right, and ports of the analog front end drive unit 302 are sequentially a first port and a second port of the analog front end drive unit 302 from left to right.

The digital front end unit 301 may be a digital front end (digital front end, DFE), or may be a digital signal processor (digital signal processor, DSP). For a to-be-sent signal, the digital front end unit 301 is configured to perform modulation processing on the to-be-sent signal. For a to-be-received signal, the digital front end unit 301 is configured to perform demodulation processing on the to-be-received signal.

The first port of the digital front end unit 301 is configured to receive a first to-be-sent signal. The first to-be-sent signal may come from a logic chip connected to the first port of the digital front end unit 301, or may come from a circuit board connected to the first port of the digital front end unit 301. A specific source of the first to-be-sent signal is not limited in this embodiment of this application. The second port of the digital front end unit 301 is connected to the first port of the analog front end drive unit 302.

The analog front end drive unit 302 is configured to perform conversion and duplication processing on a to-be-sent signal sent by the digital front end unit 301. In a possible implementation, the analog front end drive unit 302 includes one analog front end unit and a plurality of line drive units. In a possible implementation, the analog front end drive unit 302 includes one analog front end unit and one line drive unit. The two manners may be corresponding to Embodiment 2 and Embodiment 4.

The first port of the analog front end drive unit 302 is connected to the second port of the digital front end unit 301. The analog front end drive unit 302 includes a plurality of second ports. In the embodiment shown in FIG. 3, two second ports are used as an example, and a case in which there are more than two second ports may be an extension based on a case in which there are two second ports. The plurality of second ports of the analog front end drive unit 302 are connected to a plurality of twisted pairs 102 in a one-to-one manner. To be specific, when the analog front end drive unit 302 includes two second ports, one second port of the analog front end drive unit 302 is connected to one twisted pair 102, and the other second port thereof is connected to the other twisted pair 102.

The digital front end unit 301 receives the first to-be-sent signal, performs modulation processing on the first to-be-sent signal to obtain a second to-be-sent signal, and sends the second to-be-sent signal to the analog front end drive unit 302.

The analog front end drive unit 302 performs conversion and duplication processing on the second to-be-sent signal to obtain a plurality of third to-be-sent signals, and sends the plurality of third to-be-sent signals to the plurality of twisted pairs through the plurality of second ports of the analog front end drive unit 302 in a one-to-one manner. In other words, one third to-be-sent signal is sent to one twisted pair through one second port of the analog front end drive unit 302. A quantity of second ports of the analog front end drive unit 302 may be greater than or equal to a quantity of third to-be-sent signals, so that each third to-be-sent signal can be transmitted to the twisted pair through the second port of the analog front end drive unit 302.

The plurality of third to-be-sent signals are sent respectively through the plurality of twisted pairs, so that a signal receive end receives the plurality of third to-be-sent signals.

In the schematic structural diagram of the communications apparatus shown in FIG. 3, the analog front end drive unit 302 performs conversion and duplication processing on the second to-be-sent signal to obtain the plurality of third to-be-sent signals, and sends the plurality of third to-be-sent signals to the plurality of twisted pairs through the plurality of second ports of the analog front end drive unit 302 in a one-to-one manner; and one third to-be-sent signal is sent through one twisted pair. In this way, a voltage of a signal finally received by the signal receive end is increased, and an SNR of the signal receive end is increased, thereby reducing impact of long-range communication on a service rate, and increasing a service rate of a long-range user.

That there are two twisted pairs and the analog front end drive unit 302 shown in FIG. 3 includes two second ports is used as an example. Power and effective voltages of signals from all the twisted pairs that arrive at the signal receive end are the same, and an effective voltage value of a signal finally acquired by the signal receive end is increased by one time (6 dB). Therefore, an SNR finally obtained by the signal receive end is also increased by 6 dB as a whole. The SNR is increased by 6 dB, and a carried bit (bit) is increased by 2 bits/Hz. For a long-range user, cable attenuation is increased, a rate is relatively low, and a performance improvement rate is gradually increased. Therefore, impact of long-range communication on a service rate can be reduced, and a service rate of the long-range user can be increased.

In the schematic structural diagram of the communications apparatus shown in FIG. 3, one digital front end unit 301 and one analog front end drive unit 302 are included. In this embodiment of this application, compared with FIG. 1 in which a plurality of sets of DFEs, AFEs, LDs, and hybrid circuits are used, device costs can be reduced, and a device structure can be simplified.

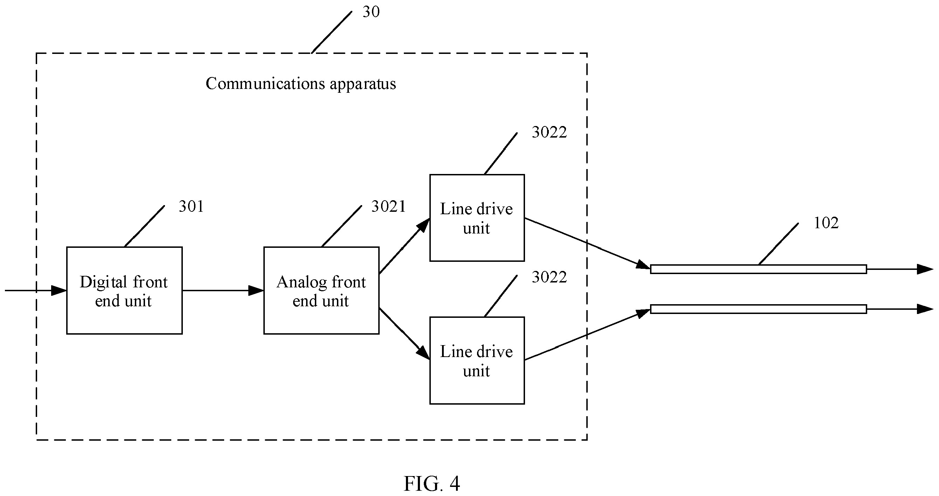

FIG. 4 is a schematic structural diagram of a communications apparatus according to Embodiment 2 of this application. The communications apparatus 30 includes a digital front end unit 301 and an analog front end drive unit 302. The analog front end drive unit 302 includes one analog front end unit 3021 and a plurality of line drive units 3022. In the schematic structural diagram shown in FIG. 4, two line drive units 3022 are used as an example for description.

Ports of the analog front end unit 3021 are sequentially a first port and a second port of the analog front end unit 3021 from left to right, and ports of the line drive unit 3022 are sequentially a first port and a second port of the line drive unit 3022 from left to right.

The analog front end unit 3021 may be an analog front end (analog front end, AFE). For a to-be-sent signal, the analog front end unit 3021 is configured to perform digital-to-analog conversion processing on the to-be-sent signal, that is, convert a digital signal into an analog signal. For a to-be-received signal, the analog front end unit 3021 is configured to perform analog-to-digital conversion processing on the to-be-received signal, that is, convert an analog signal into a digital signal.

The line drive unit 3022 may be a line driver (LD). The line driver may include an amplifier, configured to receive a to-be-sent signal from the analog front end unit 3021, and perform amplification processing on the to-be-sent signal, that is, amplify power of the to-be-sent signal.

The first port of the analog front end unit 3021 is connected to a second port of the digital front end unit 301. A plurality of second ports of the analog front end unit 3021 are connected to first ports of the plurality of line drive units in a one-to-one manner. For example, the analog front end unit 3021 includes two second ports. One second port of the analog front end unit 3021 is connected to a first port of one line drive unit, and the other second port of the analog front end unit 3021 is connected to a first port of the other line drive unit. In other words, one port of the analog front end unit 3021 is connected to a first port of one line drive unit, and it is impossible that two ports of the analog front end unit 3021 are connected to a first port of one line drive unit.

A second port of one line drive unit 3022 is connected to one twisted pair 102.

The analog front end unit 3021 performs digital-to-analog conversion processing and duplication processing on a second to-be-sent signal to obtain a plurality of second to-be-sent signals after the digital-to-analog conversion. The analog front end unit 3021 sends, to the plurality of line drive units 3022 through the plurality of second ports of the analog front end unit 3021 in a one-to-one manner, the plurality of second to-be-sent signals obtained after the digital-to-analog conversion processing. For example, the analog front end unit 3021 includes two second ports. The analog front end unit 3021 sends, to one line drive unit 3022 through one second port of the analog front end unit 3021, one second to-be-sent signal obtained after the digital-to-analog conversion, and sends, to the other line drive unit 3022 through the other second port of the analog front end unit 3021, the other second to-be-sent signal obtained after the digital-to-analog conversion.

The line drive unit 3022 performs amplification processing on the second to-be-sent signal obtained after the digital-to-analog conversion processing, to obtain a third to-be-sent signal. Each line drive unit 3022 performs power amplification on the second to-be-sent signal obtained after the digital-to-analog conversion processing, to obtain the third to-be-sent signal. Because there are the plurality of line drive units 3022, each line drive unit sends one third to-be-sent signal to a signal receive end through one twisted pair 102. In this way, a voltage of a signal finally received by the signal receive end is increased, and an SNR of the signal receive end is increased, thereby reducing impact of long-range communication on a service rate.

In the schematic structural diagram shown in FIG. 4, if output power of each line drive unit is the same as output power of a line driver in a solution in which a single DSL port is used, transmit power of a signal on each twisted pair is the same as transmit power of a signal on a twisted pair in the solution in which the single DSL port is used. Therefore, power and effective voltages of signals from all the twisted pairs that arrive at the signal receive end are the same, and an effective voltage value of a signal finally acquired by the signal receive end is increased by one time (6 dB). Therefore, an SNR finally obtained by the signal receive end is also increased by 6 dB as a whole. The SNR is increased by 6 dB, and a carried bit (bit) is increased by 2 bits/Hz. For a long-range user, cable attenuation is increased, a rate is relatively low, and a performance improvement rate is gradually increased. Therefore, impact of long-range communication on a service rate can be reduced, and a service rate of the long-range user can be increased.

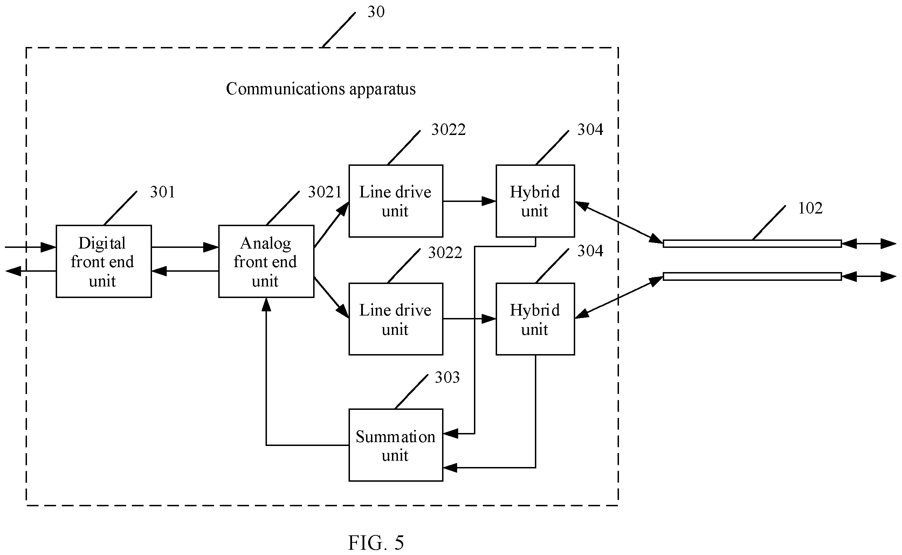

FIG. 5 is a schematic structural diagram of a communications apparatus according to Embodiment 3 of this application. Based on the schematic structural diagram shown in FIG. 4, a summation unit 303 and a hybrid unit 304 are further included in the schematic structural diagram shown in FIG. 5.

The summation unit 303 may be a summator, configured to add up voltages of received signals. The hybrid unit 304 may be a hybrid circuit, configured to separate a to-be-sent signal from a to-be-received signal, so that the to-be-sent signal can be sent to the twisted pair 102, the to-be-received signal can be transmitted to the summation unit 303, and transmission of the to-be-sent signal to the summation unit 303 is prevented. In this way, impact of the to-be-sent signal on the to-be-received signal is reduced.

Ports of the summation unit 303 are sequentially a first port and second ports of the summation unit 303 from left to right, and ports of the hybrid unit 304 are sequentially a first port and a second port of the hybrid unit 304 from left to right. The hybrid unit 304 further includes a third port, that is, a port used by the hybrid unit 304 to receive a to-be-sent signal from the line drive unit 3022 is different from a port used by the hybrid unit 304 to send a to-be-received signal to the summation unit 303.

The first port of the summation unit 303 is connected to a third port of the analog front end unit 3021, and the third port of the analog front end unit 3021 and the second ports of the analog front end unit 3021 may be a same port, or may be different ports. Usually, the two ports are different ports, that is, the second port is configured to send a to-be-sent signal to the line drive unit 3022, and the third port is configured to receive a to-be-received signal from the summation unit 303. A port used by the analog front end unit 3021 to send a to-be-received signal and the first port of the analog front end unit 3021 may be a same port, or may be different ports. Usually, the two ports are different ports. In other words, on the analog front end unit 3021, a port for transmitting a to-be-sent signal is usually different from a port for transmitting a to-be-received signal. Similarly, on the digital front end unit 301, a port for transmitting a to-be-sent signal is usually different from a port for transmitting a to-be-received signal.

The second ports of the summation unit 303 are configured to receive a plurality of first to-be-received signals, and each second port may specifically be configured to receive a first to-be-received signal from each hybrid unit 304.

The hybrid unit 304 receives the first to-be-received signal through the twisted pair 102, and sends the first to-be-received signal to the summation unit 303.

The summation unit 303 receives the plurality of first to-be-received signals, and adds up voltages of the plurality of first to-be-received signals to obtain a second to-be-received signal. If voltages of all the first to-be-received signals are the same, a voltage of the second to-be-received signal is N times the voltage of the first to-be-received signal, where N is a positive integer and is related to a quantity of first to-be-received signals. The summation unit 303 sends the second to-be-received signal to the analog front end unit 3021.

The analog front end unit 3021 performs analog-to-digital conversion processing on the second to-be-received signal to obtain a third to-be-received signal, and sends the third to-be-received signal to the digital front end unit 301. The digital front end unit 301 performs demodulation processing on the third to-be-received signal to obtain a fourth to-be-received signal, and sends the fourth to-be-received signal.

A second port of one line drive unit 3022 is connected to a first port of one hybrid unit 304, a second port of the hybrid unit 304 is connected to the twisted pair 102, and a third port of the hybrid unit 304 is connected to the second port of the summation unit 303.

One line drive unit 3022 sends one third to-be-sent signal to one hybrid unit 304 through a second port of the line drive unit 3022, and the hybrid unit 304 sends the third to-be-sent signal to one twisted pair 102.

In the schematic structural diagram shown in FIG. 5, both a signal sending function and a signal receiving function can be implemented, and impact of long-range communication on a service rate can be reduced.

In the schematic structural diagrams shown in FIG. 4 and FIG. 5, a drive capability of the line drive unit 3022 is the same as a drive capability of the line driver in the solution in which the single DSL port is used. An active matching circuit or a passive matching circuit can be applied to the manners shown in FIG. 4 and FIG. 5.

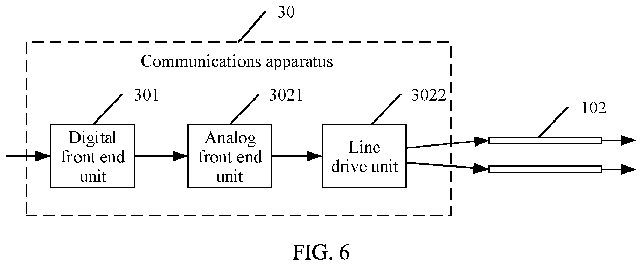

FIG. 6 is a schematic structural diagram of a communications apparatus according to Embodiment 4 of this application. The communications apparatus 30 includes a digital front end unit 301 and an analog front end drive unit 302. The analog front end drive unit 302 includes one analog front end unit 3021 and one line drive unit 3022. In addition, the line drive unit 3022 includes two second ports. In the schematic structural diagram shown in FIG. 6, an example in which the line drive unit 3022 includes two second ports is used for description.

A first port of the analog front end unit 3021 is connected to a second port of the digital front end unit 301, and a second port of the analog front end unit 3021 is connected to a first port of the line drive unit 3022. A plurality of second ports of the line drive unit 3022 are connected to a plurality of twisted pairs 102 in a one-to-one manner. One second port of the line drive unit 3022 is connected to one twisted pair 102, and the other second port of the line drive unit 3022 is connected to the other twisted pair 102.

The analog front end unit 3021 performs digital-to-analog conversion processing on a second to-be-sent signal, and sends a second to-be-sent signal obtained after the digital-to-analog conversion processing to the line drive unit 3022. The line drive unit 3022 performs amplification processing on the second to-be-sent signal obtained after the digital-to-analog conversion processing, to obtain a third to-be-sent signal, and performs duplication processing on the third to-be-sent signal to obtain a plurality of third to-be-sent signals.

In the schematic structural diagram shown in FIG. 6, if output power of each line drive unit is the same as output power of a line driver in a solution in which a single DSL port is used, transmit power of a signal on each twisted pair is the same as transmit power of a signal on a twisted pair in the solution in which the single DSL port is used. Therefore, power and effective voltages of signals from all the twisted pairs that arrive at the signal receive end are the same, and an effective voltage value of a signal finally acquired by the signal receive end is increased by one time (6 dB). Therefore, an SNR finally obtained by the signal receive end is also increased by 6 dB as a whole. The SNR is increased by 6 dB, and a carried bit (bit) is increased by 2 bits/Hz. For a long-range user, cable attenuation is increased, a rate is relatively low, and a performance improvement rate is gradually increased. Therefore, impact of long-range communication on a service rate can be reduced, and a service rate of the long-range user can be increased.

A difference between the embodiments shown in FIG. 6 and FIG. 4 lies in that, the analog front end unit performs duplication processing in the embodiment shown in FIG. 4, while the line drive unit performs duplication processing in the embodiment shown in FIG. 6. The two embodiments can achieve same beneficial effects. The duplication processing means performing duplication to obtain a plurality of same signals.

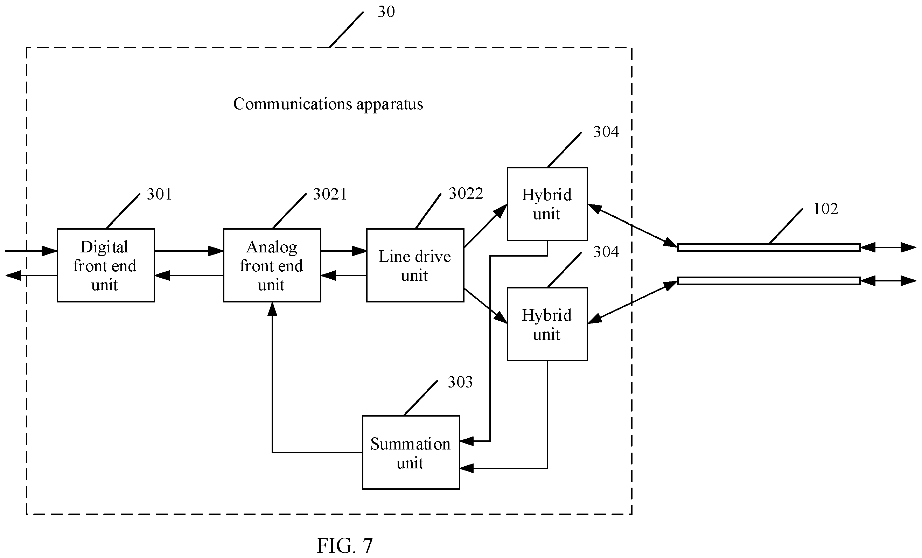

FIG. 7 is a schematic structural diagram of a communications apparatus according to Embodiment 5 of this application. Based on the schematic structural diagram shown in FIG. 6, a summation unit 303 and a hybrid unit 304 are further included in the schematic structural diagram shown in FIG. 7. For details, refer to the descriptions about the summation unit 303 and the hybrid unit 304 in the embodiment shown in FIG. 5. Details are not described herein again.

In the schematic structural diagrams shown in FIG. 6 and FIG. 7, a drive capability of the line drive unit 3022 needs to be increased by one time compared with a drive capability of the line driver in the solution in which the single DSL port is used. A passive matching circuit can be applied to the manners shown in FIG. 6 and FIG. 7.

In a possible implementation, a plurality of voltage transformation units are further included in the schematic structural diagrams shown in FIG. 4 to FIG. 7. The voltage transformation unit may be a transformer circuit, the voltage transformation unit may be located between a hybrid unit and a twisted pair, and a quantity of voltage transformation units may be the same as a quantity of hybrid units 304.

A first end of the voltage transformation unit is connected to a second end of the hybrid unit 304, and a second end of the voltage transformation unit is connected to a twisted pair. The voltage transformation unit is configured to perform voltage transformation processing on a third to-be-sent signal. All the voltage transformation units may perform same voltage transformation processing on third to-be-sent signals, so that voltages of signals transmitted on all twisted pairs are the same.

An embodiment of this application further provides a communications system, including two or more communications apparatuses shown in FIG. 5, or including two or more communications apparatuses shown in FIG. 7. It can be understood that a structure used by a signal receive end should be the same as a structure used by a signal transmit end. For example, both the signal transmit end and the signal receive end use the communications apparatus shown in FIG. 5.

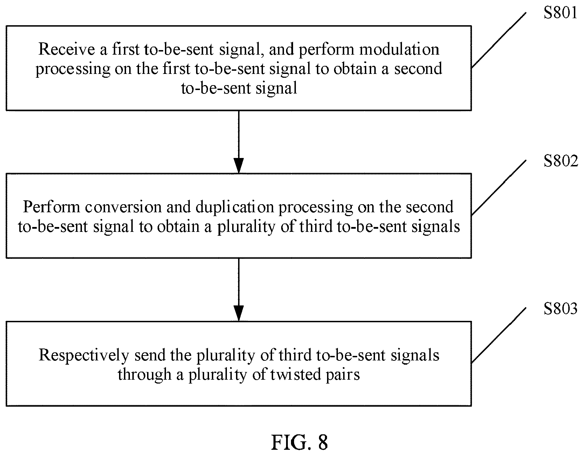

FIG. 8 is a schematic flowchart of a communication method according to an embodiment of this application. The communication method may include but is not limited to the following steps.

Step S801. Receive a first to-be-sent signal, and perform modulation processing on the first to-be-sent signal to obtain a second to-be-sent signal.

A communications apparatus receives the first to-be-sent signal, and performs modulation processing on the first to-be-sent signal to obtain the second to-be-sent signal. A digital front end unit in the communications apparatus may perform modulation processing on the first to-be-sent signal to obtain the second to-be-sent signal.

Step S802. Perform conversion and duplication processing on the second to-be-sent signal to obtain a plurality of third to-be-sent signals.

In a possible implementation, the communications apparatus sequentially performs digital-to-analog conversion processing, duplication processing, and amplification processing on the second to-be-sent signal to obtain the plurality of third to-be-sent signals. This may be corresponding to the schematic structural diagrams shown in FIG. 4 and FIG. 5.

In a possible implementation, the communications apparatus sequentially performs digital-to-analog conversion processing, amplification processing, and duplication processing on the second to-be-sent signal to obtain the plurality of third to-be-sent signals. This may be corresponding to the schematic structural diagrams shown in FIG. 6 and FIG. 7.

Step S803. Send the plurality of third to-be-sent signals respectively through a plurality of twisted pairs.

The communications apparatus sends the plurality of third to-be-sent signals respectively through the plurality of twisted pairs. In this way, a voltage of a signal finally received by a receive end is increased, and a signal-to-noise ratio is increased, thereby reducing impact of long-range communication on a service rate.

In a possible implementation, the communications apparatus performs voltage transformation processing on the plurality of third to-be-sent signals, and sends, respectively through the plurality of twisted pairs, a plurality of third to-be-sent signals obtained after the voltage transformation processing. Before the third to-be-sent signals are sent through the twisted pairs, voltage transformation processing is performed on the third to-be-sent signals. The communications apparatus may perform same voltage transformation processing on all the third to-be-sent signals, so that voltages of signals transmitted on all the twisted pairs are the same.

In a possible implementation, the communications apparatus performs hybrid processing on the plurality of third to-be-sent signals, and sends, respectively through the plurality of twisted pairs, a plurality of third to-be-sent signals obtained after the hybrid processing. Before the third to-be-sent signals are sent through the twisted pairs, hybrid processing is performed on the third to-be-sent signals, to separate a to-be-sent signal from a to-be-received signal.

A person of ordinary skill in the art may be aware that, in combination with the examples described in the embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instruction may be stored in a computer readable storage medium, or may be transmitted by using the computer readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A communications apparatus, wherein the communications apparatus (30) is applied to a transceiver, and the communications apparatus (30) comprises a digital front end unit (301) and an analog front end drive unit (302);
a first port of the digital front end unit (301) is configured to receive a first to-be-sent signal, and a second port of the digital front end unit (301) is connected to a first port of the analog front end drive unit (302);
the digital front end unit (301) receives the first to-be-sent signal, performs modulation processing on the first to-be-sent signal to obtain a second to-be-sent signal, and sends the second to-be-sent signal to the analog front end drive unit (302);
wherein a plurality of second ports of the analog front end drive unit (302) are connected to a plurality of twisted pairs (102) in a one-to-one manner;
the analog front end drive unit (302) performs conversion and duplication processing on the second to-be-sent signal to obtain a plurality of third to-be-sent signals, and sends the plurality of third to-be-sent signals to the plurality of twisted pairs (102) through the plurality of second ports of the analog front end drive unit (302) in a one-to-one manner; and
the plurality of third to-be-sent signals are respectively sent through the plurality of twisted pairs (102).

2. The apparatus according to claim 1, wherein the analog front end drive unit (302) comprises an analog front end unit (3021) and a plurality of line drive units (3022);
a first port of the analog front end unit (3021) is connected to the second port of the digital front end unit (301), a plurality of second ports of the analog front end unit (3021) are connected to first ports of the plurality of line drive units (3022) in a one-to-one manner, and second ports of the line drive units (3022) are connected to the twisted pairs (102);
the analog front end unit (3021) performs digital-to-analog conversion processing and duplication processing on the second to-be-sent signal to obtain a plurality of second to-be-sent signals after the digital-to-analog conversion;
the analog front end unit (3021) sends, to the plurality of line drive units (3022) through the plurality of second ports of the analog front end unit (3021) in a one-to-one manner, the plurality of second to-be-sent signals obtained after the digital-to-analog conversion processing; and
the line drive unit (3022) performs amplification processing on the second to-be-sent signals obtained after the digital-to-analog conversion processing, to obtain the third to-be-sent signals.

3. The apparatus according to claim 1, wherein the analog front end drive unit (302) comprises an analog front end unit (3021) and a line drive unit (3022);
a first port of the analog front end unit (3021) is connected to the second port of the digital front end unit (301), a second port of the analog front end unit (3021) is connected to a first port of the line drive unit (3022), and a plurality of second ports of the line drive unit (3022) are connected to the plurality of twisted pairs (102) in a one-to-one manner;
the analog front end unit (3021) performs digital-to-analog conversion processing on the second to-be-sent signal, and sends a second to-be-sent signal obtained after the digital-to-analog conversion processing to the line drive unit (3022);
the line drive unit (3022) performs amplification processing on the second to-be-sent signal obtained after the digital-to-analog conversion processing, to obtain a third to-be-sent signal; and
the line drive unit (3022) performs duplication processing on the third to-be-sent signal to obtain the plurality of third to-be-sent signals.

4. The apparatus according to claim 2 or 3, wherein the communications apparatus (30) further comprises a summation unit (303);
a first port of the summation unit (303) is connected to a third port of the analog front end unit (3021), and second ports of the summation unit (303) are configured to receive a plurality of first to-be-received signals;
the summation unit (303) receives the plurality of first to-be-received signals, and adds up voltages of the plurality of first to-be-received signals to obtain a second to-be-received signal;
the summation unit (303) sends the second to-be-received signal to the analog front end unit (3021);
the analog front end unit (3021) performs analog-to-digital conversion processing on the second to-be-received signal to obtain a third to-be-received signal, and sends the third to-be-received signal to the digital front end unit (301); and
the digital front end unit (301) performs demodulation processing on the third to-be-received signal to obtain a fourth to-be-received signal, and sends the fourth to-be-received signal.

5. The apparatus according to claim 4, if voltages of all the first to-be-received signals are the same, a voltage of the second to-be-received signal is N times the voltage of the first to-be-received signal, wherein N is a positive integer and is related to a quantity of first to-be-received signals.

6. The apparatus according to claim 4, wherein the communications apparatus (30) further comprises a plurality of hybrid units (304);
the plurality of second ports of the analog front end drive unit (302) are connected to first ports of the plurality of hybrid units (304) in a one-to-one manner, second ports of the hybrid units (304) are connected to the twisted pairs (102), and third ports of the hybrid units (304) are connected to the second ports of the summation unit (303);
the analog front end drive unit (302) sends the plurality of third to-be-sent signals to the plurality of hybrid units (304) through the plurality of second ports of the analog front end drive unit (302) in a one-to-one manner; and
the hybrid units (304) send the third to-be-sent signals to the twisted pairs (102).

7. The apparatus according to claim 6, wherein the hybrid units (304) receive the first to-be-received signals through the twisted pairs (102), and send the first to-be-received signals to the summation unit (303).

8. The apparatus according to claim 6, wherein the communications apparatus (30) further comprises a plurality of voltage transformation units, and a quantity of voltage transformation units is the same as a quantity of hybrid units (304);
a first end of the voltage transformation unit is connected to a second end of the hybrid unit (304), and a second end of the voltage transformation unit is connected to the twisted pair (102); and the voltage transformation unit is configured to perform voltage transformation processing on the third to-be-sent signals.

9. The apparatus according to claim 6, wherein a quantity of hybrid units (304) is greater than or equal to a quantity of second ports of the analog front end drive unit (302), and the quantity of second ports of the analog front end drive unit (302) is greater than or equal to a quantity of third to-be-sent signals.

10. A communications system, wherein the communications system comprises two communications apparatuses (30) according to any one of claims 1 to 9 and a plurality of twisted pairs (102), one communications apparatus (30) of the two communications apparatuses (30) is configured to send a signal, the other communications apparatus (30) of the two communications apparatuses (30) is configured to receive a signal, and the twisted pairs (102) are configured to transmit the signals.

11. A communication method performed by a communications apparatus (30), wherein the communications apparatus (30) is applied to a transceiver, and the communications apparatus (30) comprises a digital front end unit (301) and an analog front end drive unit (302), wherein a first port of the digital front end unit (301) is configured to receive a first to-be-sent signal, and a second port of the digital front end unit (301) is connected to a first port of the analog front end drive unit (302), the method comprising:
receiving, by the digital front end unit (301), the first to-be-sent signal,
performing, by the digital front end unit (301), modulation processing on the first to-be-sent signal to obtain a second to-be-sent signal, and
sending, by the digital front end unit (301), the second to-be-sent signal to the analog front end drive unit (302); wherein
a plurality of second ports of the analog front end drive unit (302) are connected to a plurality of twisted pairs (102) in a one-to-one manner; and
the method further comprises:
performing, by the analog front end drive unit (302), conversion and duplication processing on the second to-be-sent signal to obtain a plurality of third to-be-sent signals;
sending, by the analog front end drive unit (302), the plurality of third to-be-sent signals to the plurality of twisted pairs (102) through the plurality of second ports of the analog front end drive unit (302) in a one-to-one manner; and
respectively sending the plurality of third to-be-sent signals through the plurality of twisted pairs (102).

12. The method according to claim 11, wherein the method further comprises:
receiving a plurality of first to-be-received signals through the plurality of twisted pairs (102), and adding up voltages of the plurality of first to-be-received signals to obtain a second to-be-received signal;
performing analog-to-digital conversion processing on the second to-be-received signal to obtain a third to-be-received signal; and
performing demodulation processing on the third to-be-received signal to obtain a fourth to-be-received signal.

13. The method according to claim 12, wherein the performing conversion and duplication processing on the second to-be-sent signal to obtain a plurality of third to-be-sent signals comprises:
sequentially performing digital-to-analog conversion processing, duplication processing, and amplification processing on the second to-be-sent signal to obtain the plurality of third to-be-sent signals.

14. The method according to claim 12, wherein the performing conversion and duplication processing on the second to-be-sent signal to obtain a plurality of third to-be-sent signals comprises:
sequentially performing digital-to-analog conversion processing, amplification processing, and duplication processing on the second to-be-sent signal to obtain the plurality of third to-be-sent signals.

15. The method according to claim 12, wherein the respectively sending the plurality of third to-be-sent signals through a plurality of twisted pairs (102) comprises:
performing voltage transformation processing on the plurality of third to-be-sent signals, and respectively sending, through the plurality of twisted pairs (102), a plurality of third to-be-sent signals obtained after the voltage transformation processing.

## Patentansprüche

1. Kommunikationsvorrichtung, wobei die Kommunikationsvorrichtung (30) auf einen Transceiver angewendet wird und die Kommunikationsvorrichtung (30) eine digitale Front-End-Einheit (301) und eine analoge Front-End-Treibereinheit (302) umfasst;
wobei ein erster Anschluss der digitalen Front-End-Einheit (301) ausgebildet ist, um ein erstes zu sendendes Signal zu empfangen, und ein zweiter Anschluss der digitalen Front-End-Einheit (301) mit einem ersten Anschluss der analogen Front-End-Treibereinheit (302) verbunden ist;
die digitale Front-End-Einheit (301) empfängt das erste zu sendende Signal, führt eine Modulationsverarbeitung an dem ersten zu sendenden Signal durch, um ein zweites zu sendendes Signal zu erhalten, und sendet das zweite zu sendende Signal an die analoge Front-End-Treibereinheit (302);
wobei eine Vielzahl von zweiten Anschlüssen der analogen Front-End-Treibereinheit (302) mit einer Vielzahl von verdrillten Doppelleitungen (102) in einer Eins-zu-Eins-Weise verbunden sind,
die analoge Front-End-Treibereinheit (302) eine Umwandlungs- und Vervielfältigungsverarbeitung an dem zweiten zu sendenden Signal durchführt, um eine Vielzahl von dritten zu sendenden Signalen zu erhalten, und die Vielzahl von dritten zu sendenden Signalen an die Vielzahl von verdrillten Doppelleitungen (102) über die Vielzahl von zweiten Anschlüssen der analogen Front-End-Treibereinheit (302) in einer Eins-zu-Eins-Weise sendet; und
die mehreren dritten zu sendenden Signale jeweils über die mehreren verdrillten Doppelleitungen (102) gesendet werden.

2. Vorrichtung nach Anspruch 1, wobei die analoge Front-End-Treibereinheit (302) eine analoge Front-End-Einheit (3021) und eine Vielzahl von Leitungstreibereinheiten (3022) umfasst;
wobei ein erster Anschluss der analogen Front-End-Einheit (3021) mit dem zweiten Anschluss der digitalen Front-End-Einheit (301) verbunden ist, eine Vielzahl von zweiten Anschlüssen der analogen Front-End-Einheit (3021) mit ersten Anschlüssen der Vielzahl von Leitungstreibereinheiten (3022) in einer Eins-zu-Eins-Weise verbunden sind und zweite Anschlüsse der Leitungstreibereinheiten (3022) mit den verdrillten Doppelleitungen (102) verbunden sind,
die analoge Front-End-Einheit (3021) eine Digital-Analog-Wandlungsverarbeitung und eine Vervielfältigungsverarbeitung an dem zweiten zu sendenden Signal durchführt, um eine Vielzahl von zweiten zu sendenden Signalen nach der Digital-Analog-Wandlung zu erhalten;
die analoge Front-End-Einheit (3021) über die Vielzahl von zweiten Anschlüssen der analogen Front-End-Einheit (3021) die Vielzahl von zweiten zu sendenden Signalen, die nach der Digital-Analog-Wandlungsverarbeitung erhalten wurden, in einer Eins-zu-Eins-Weise an die Vielzahl von Leitungstreibereinheiten (3022) sendet; und
die Leitungstreibereinheit (3022) eine Verstärkungsverarbeitung an den zweiten zu sendenden Signalen durchführt, die nach der Digital-Analog-Wandlungsverarbeitung erhalten wurden, um die dritten zu sendenden Signale zu erhalten.

3. Vorrichtung nach Anspruch 1, wobei die analoge Front-End-Treibereinheit (302) eine analoge Front-End-Einheit (3021) und eine Leitungstreibereinheit (3022) umfasst;
wobei ein erster Anschluss der analogen Front-End-Einheit (3021) mit dem zweiten Anschluss der digitalen Front-End-Einheit (301) verbunden ist, ein zweiter Anschluss der analogen Front-End-Einheit (3021) mit einem ersten Anschluss der Leitungstreibereinheit (3022) verbunden ist, und eine Vielzahl von zweiten Anschlüssen der Leitungstreibereinheit (3022) mit der Vielzahl von verdrillten Doppelleitungen (102) in einer Eins-zu-Eins-Weise verbunden ist;
die analoge Front-End-Einheit (3021) eine Digital-Analog-Wandlungsverarbeitung an dem zweiten zu sendenden Signal durchführt und ein zweites zu sendendes Signal, das nach der Digital-Analog-Wandlungsverarbeitung erhalten wurde, an die Leitungstreibereinheit (3022) sendet;
die Leitungstreibereinheit (3022) eine Verstärkungsverarbeitung an dem zweiten zu sendenden Signal durchführt, das nach der Digital-Analog-Wandlungsverarbeitung erhalten wurde, um ein drittes zu sendendes Signal zu erhalten; und
die Leitungstreibereinheit (3022) eine Vervielfältigungsverarbeitung an dem dritten zu sendenden Signal durchführt, um die Vielzahl von dritten zu sendenden Signalen zu erhalten.

4. Vorrichtung nach Anspruch 2 oder 3, wobei die Kommunikationsvorrichtung (30) ferner eine Summierungseinheit (303) umfasst;
wobei ein erster Anschluss der Summierungseinheit (303) mit einem dritten Anschluss der analogen Front-End-Einheit (3021) verbunden ist, und zweite Anschlüsse der Summierungseinheit (303) so konfiguriert sind, dass sie eine Vielzahl von ersten zu empfangenden Signalen empfangen,
die Summierungseinheit (303) die Vielzahl von ersten zu empfangenden Signalen empfängt und die Spannungen der Vielzahl von ersten zu empfangenden Signalen addiert, um ein zweites zu empfangendes Signal zu erhalten;
die Summierungseinheit (303) das zweite zu empfangende Signal an die analoge Front-End-Einheit (3021) sendet;
die analoge Front-End-Einheit (3021) eine Analog-Digital-Wandlungsverarbeitung an dem zweiten zu empfangenden Signal durchführt, um ein drittes zu empfangendes Signal zu erhalten, und das dritte zu empfangende Signal an die digitale Front-End-Einheit (301) sendet; und
die digitale Front-End-Einheit (301) eine Demodulationsverarbeitung an dem dritten zu empfangenden Signal durchführt, um ein viertes zu empfangendes Signal zu erhalten, und das vierte zu empfangende Signal sendet.

5. Vorrichtung nach Anspruch 4, wobei, wenn die Spannungen aller ersten zu empfangenden Signale gleich sind, eine Spannung des zweiten zu empfangenden Signals das N-fache der Spannung des ersten zu empfangenden Signals ist, wobei N eine positive ganze Zahl ist und sich auf eine Menge von ersten zu empfangenden Signalen bezieht.

6. Vorrichtung nach Anspruch 4, wobei die Kommunikationsvorrichtung (30) ferner eine Vielzahl von Hybrideinheiten (304) umfasst;
wobei die Vielzahl von zweiten Anschlüssen der analogen Front-End-Treibereinheit (302) mit ersten Anschlüssen der Vielzahl von Hybrideinheiten (304) in einer Eins-zu-Eins-Weise verbunden sind, zweite Anschlüsse der Hybrideinheiten (304) mit den verdrillten Doppelleitungen (102) verbunden sind, und dritte Anschlüsse der Hybrideinheiten (304) mit den zweiten Anschlüssen der Summierungseinheit (303) verbunden sind,
die analoge Front-End-Treibereinheit (302) die Vielzahl von dritten zu sendenden Signalen über die Vielzahl von zweiten Anschlüssen der analogen Front-End-Treibereinheit (302) in einer Eins-zu-Eins-Weise an die Vielzahl von Hybrideinheiten (304) sendet; und
die Hybrideinheiten (304) die dritten zu sendenden Signale an die verdrillten Doppelleitungen (102) senden.

7. Vorrichtung nach Anspruch 6, wobei die Hybrideinheiten (304) die ersten zu empfangenden Signale über die verdrillten Doppelleitungen (102) empfangen und die ersten zu empfangenden Signale an die Summierungseinheit (303) senden.

8. Vorrichtung nach Anspruch 6, wobei die Kommunikationsvorrichtung (30) ferner eine Vielzahl von Spannungstransformationseinheiten umfasst und eine Anzahl der Spannungstransformationseinheiten die gleiche ist wie eine Anzahl der Hybrideinheiten (304);
wobei ein erstes Ende der Spannungstransformationseinheit mit einem zweiten Ende der Hybrideinheit (304) verbunden ist und ein zweites Ende der Spannungstransformationseinheit mit der verdrillten Doppelleitung (102) verbunden ist; und
die Spannungstransformationseinheit so ausgebildet ist, dass sie eine Spannungstransformationsverarbeitung an den dritten zu sendenden Signalen durchführt.

9. Vorrichtung nach Anspruch 6, wobei eine Anzahl von Hybrideinheiten (304) größer oder gleich einer Anzahl von zweiten Anschlüssen der analogen Front-End-Treibereinheit (302) ist, und die Anzahl von zweiten Anschlüssen der analogen Front-End-Treibereinheit (302) größer oder gleich einer Anzahl von dritten zu sendenden Signalen ist.

10. Kommunikationssystem, wobei das Kommunikationssystem zwei Kommunikationsvorrichtungen (30) nach einem der Ansprüche 1 bis 9 und eine Vielzahl von verdrillten Doppelleitungen (102) umfasst, wobei eine Kommunikationsvorrichtung (30) der beiden Kommunikationsvorrichtungen (30) so ausgebildet ist, dass sie ein Signal sendet, die andere Kommunikationsvorrichtung (30) der beiden Kommunikationsvorrichtungen (30) so ausgebildet ist, dass sie ein Signal empfängt, und die verdrillten Doppelleitungen (102) so ausgebildet sind, dass sie die Signale übertragen.

11. Kommunikationsverfahren, das von einer Kommunikationsvorrichtung (30) durchgeführt wird, wobei die Kommunikationsvorrichtung (30) auf einen Transceiver angewendet wird und die Kommunikationsvorrichtung (30) eine digitale Front-End-Einheit (301) und eine analoge Front-End-Treibereinheit (302) umfasst, wobei ein erster Anschluss der digitalen Front-End-Einheit (301) so ausgebildet ist, dass er ein erstes zu sendendes Signal empfängt, und ein zweiter Anschluss der digitalen Front-End-Einheit (301) mit einem ersten Anschluss der analogen Front-End-Treibereinheit (302) verbunden ist, wobei das Verfahren Folgendes umfasst:
Empfangen, durch die digitale Front-End-Einheit (301), des ersten zu sendenden Signals,
Durchführen, durch die digitale Front-End-Einheit (301), einer Modulationsverarbeitung an dem ersten zu sendenden Signal, um ein zweites zu sendendes Signal zu erhalten, und
Senden, durch die digitale Front-End-Einheit (301), des zweiten zu sendenden Signals an die analoge Front-End-Treibereinheit (302);
wobei eine Vielzahl von zweiten Anschlüssen der analogen Front-End-Treibereinheit (302) mit einer Vielzahl von verdrillten Doppelleitungen (102) in einer Eins-zu-Eins-Weise verbunden sind, und
wobei das Verfahren ferner Folgendes umfasst:
Durchführen, durch die analoge Front-End-Treibereinheit (302), einer Umwandlungs- und Vervielfältigungsverarbeitung an dem zweiten zu sendenden Signal, um eine Vielzahl von dritten zu sendenden Signalen zu erhalten;
Senden, durch die analoge Front-End-Treibereinheit (302), der Vielzahl von dritten zu sendenden Signalen an die Vielzahl von verdrillten Doppelleitungen (102) über die Vielzahl von zweiten Anschlüssen der analogen Front-End-Treibereinheit (302) in einer Eins-zu-Eins-Weise; und
jeweiliges Senden der Vielzahl von dritten zu sendenden Signalen über die Vielzahl von verdrillten Doppelleitungen (102).

12. Verfahren nach Anspruch 11, wobei das Verfahren ferner Folgendes umfasst:
Empfangen einer Vielzahl von ersten zu empfangenden Signalen über die Vielzahl von verdrillten Doppelleitungen (102) und Aufaddieren der Spannungen der Vielzahl von ersten zu empfangenden Signalen, um ein zweites zu empfangendes Signal zu erhalten;
Durchführen einer Analog-Digital-Wandlungsverarbeitung an dem zweiten zu empfangenden Signal, um ein drittes zu empfangendes Signal zu erhalten; und
Durchführen einer Demodulationsverarbeitung an dem dritten zu empfangenden Signal, um ein viertes zu empfangendes Signal zu erhalten.

13. Verfahren nach Anspruch 12, wobei das Durchführen der Umwandlungs- und Vervielfältigungsverarbeitung an dem zweiten zu sendenden Signal, um eine Vielzahl von dritten zu sendenden Signalen zu erhalten, Folgendes umfasst:
sequentielles Durchführen einer Digital-Analog-Wandlungsverarbeitung, Vervielfältigungsverarbeitung und Verstärkungsverarbeitung an dem zweiten zu sendenden Signal, um die Vielzahl von dritten zu sendenden Signalen zu erhalten.

14. Verfahren nach Anspruch 12, wobei das Durchführen der Umwandlungs- und Vervielfältigungsverarbeitung an dem zweiten zu sendenden Signal, um eine Vielzahl von dritten zu sendenden Signalen zu erhalten, Folgendes umfasst:
sequentielles Durchführen einer Digital-Analog-Wandlungsverarbeitung, Verstärkungsverarbeitung und Vervielfältigungsverarbeitung an dem zweiten zu sendenden Signal, um die Vielzahl von dritten zu sendenden Signalen zu erhalten.

15. Verfahren nach Anspruch 12, wobei das jeweilige Senden der Vielzahl von dritten zu sendenden Signalen über eine Vielzahl von verdrillten Doppelleitungen (102) Folgendes umfasst:
Durchführen einer Spannungstransformationsverarbeitung an der Vielzahl von dritten zu sendenden Signalen und jeweiliges Senden einer Vielzahl von dritten zu sendenden Signalen, die nach der Spannungstransformationsverarbeitung erhalten wurden, über die Vielzahl von verdrillten Doppelleitungen (102).

## Revendications

1. Appareil de communications, l'appareil de communications (30) étant appliqué à un émetteur-récepteur, et l'appareil de communications (30) comprenant une unité frontale numérique (301) et une unité de commande frontale analogique (302) ;
un premier port de l'unité frontale numérique (301) étant configuré pour recevoir un premier signal à envoyer, et un deuxième port de l'unité frontale numérique (301) étant connecté à un premier port de l'unité de commande frontale analogique (302) ;
l'unité frontale numérique (301) recevant le premier signal à envoyer, réalisant un traitement de modulation sur le premier signal à envoyer afin d'obtenir un deuxième signal à envoyer, et envoyant le deuxième signal à envoyer à l'unité de commande frontale analogique (302) ;
une pluralité de deuxièmes ports de l'unité de commande frontale analogique (302) étant connectés à une pluralité de paires torsadées (102) de manière biunivoque ;
l'unité de commande frontale analogique (302) réalisant un traitement de conversion et de duplication sur le deuxième signal à envoyer afin d'obtenir une pluralité de troisièmes signaux à envoyer, et envoyant la pluralité de troisièmes signaux à envoyer à la pluralité de paires torsadées (102) via la pluralité de deuxièmes ports de l'unité de commande frontale analogique (302) de manière biunivoque ; et
la pluralité de troisièmes signaux à envoyer étant envoyés respectivement via la pluralité de paires torsadées (102).

2. Appareil selon la revendication 1, l'unité de commande frontale analogique (302) comprenant une unité frontale analogique (3021) et une pluralité d'unités de commande de ligne (3022) ;
un premier port de l'unité frontale analogique (3021) étant connecté au deuxième port de l'unité frontale numérique (301), une pluralité de deuxièmes ports de l'unité frontale analogique (3021) étant connectés à des premiers ports de la pluralité d'unités de commande de ligne (3022) de manière biunivoque, et des deuxièmes ports des unités de commande de ligne (3022) étant connectés aux paires torsadées (102) ;
l'unité frontale analogique (3021) réalisant un traitement de conversion numérique-analogique et un traitement de duplication sur le deuxième signal à envoyer afin d'obtenir une pluralité de deuxièmes signaux à envoyer après la conversion numérique-analogique ;
l'unité frontale analogique (3021) envoyant, à la pluralité d'unités de commande de ligne (3022), via la pluralité de deuxièmes ports de l'unité frontale analogique (3021) de manière biunivoque, la pluralité de deuxièmes signaux à envoyer obtenus après le traitement de conversion numérique-analogique ; et
l'unité de commande de ligne (3022) réalisant un traitement d'amplification sur les deuxièmes signaux à envoyer obtenus après le traitement de conversion numérique-analogique, afin d'obtenir les troisièmes signaux à envoyer.

3. Appareil selon la revendication 1, l'unité de commande frontale analogique (302) comprenant une unité frontale analogique (3021) et une unité de commande de ligne (3022) ;
un premier port de l'unité frontale analogique (3021) étant connecté au deuxième port de l'unité frontale numérique (301), un deuxième port de l'unité frontale analogique (3021) étant connecté à un premier port de l'unité de commande de ligne (3022), et une pluralité de deuxièmes ports de l'unité de commande de ligne (3022) étant connectés à la pluralité de paires torsadées (102) de manière biunivoque ;
l'unité frontale analogique (3021) réalisant un traitement de conversion numérique-analogique sur le deuxième signal à envoyer, et envoyant un deuxième signal à envoyer obtenu après le traitement de conversion numérique-analogique à l'unité de commande de ligne (3022) ;
l'unité de commande de ligne (3022) réalisant un traitement d'amplification sur le deuxième signal à envoyer obtenu après le traitement de conversion numérique-analogique, afin d'obtenir un troisième signal à envoyer ; et
l'unité de commande de ligne (3022) réalisant un traitement de duplication sur le troisième signal à envoyer afin d'obtenir la pluralité de troisièmes signaux à envoyer.

4. Appareil selon la revendication 2 ou 3, l'appareil de communications (30) comprenant en outre une unité de sommation (303) ;
un premier port de l'unité de sommation (303) étant connecté à un troisième port de l'unité frontale analogique (3021), et des deuxièmes ports de l'unité de sommation (303) étant configurés pour recevoir une pluralité de premiers signaux à recevoir ;
l'unité de sommation (303) recevant la pluralité de premiers signaux à recevoir, et additionnant des tensions de la pluralité de premiers signaux à recevoir afin d'obtenir un deuxième signal à recevoir ;
l'unité de sommation (303) envoyant le deuxième signal à recevoir à l'unité frontale analogique (3021) ;
l'unité frontale analogique (3021) réalisant un traitement de conversion analogique-numérique sur le deuxième signal à recevoir afin d'obtenir un troisième signal à recevoir, et envoyant le troisième signal à recevoir à l'unité frontale numérique (301) ; et
l'unité frontale numérique (301) réalisant un traitement de démodulation sur le troisième signal à recevoir afin d'obtenir un quatrième signal à recevoir, et envoyant le quatrième signal à recevoir.

5. Appareil selon la revendication 4, si des tensions de tous les premiers signaux à recevoir sont identiques, une tension du deuxième signal à recevoir valant N fois la tension du premier signal à recevoir, N étant un entier positif et étant lié à un nombre de premiers signaux à recevoir.

6. Appareil selon la revendication 4, l'appareil de communications (30) comprenant en outre une pluralité d'unités hybrides (304) ;
la pluralité de deuxièmes ports de l'unité de commande frontale analogique (302) étant connectés à des premiers ports de la pluralité d'unités hybrides (304) de manière biunivoque, des deuxièmes ports des unités hybrides (304) étant connectés aux paires torsadées (102), et des troisièmes ports des unités hybrides (304) étant connectés aux deuxièmes ports de l'unité de sommation (303) ;
l'unité de commande frontale analogique (302) envoyant la pluralité de troisièmes signaux à envoyer à la pluralité d'unités hybrides (304) via la pluralité de deuxièmes ports de l'unité de commande frontale analogique (302) de manière biunivoque ; et les unités hybrides (304) envoyant les troisièmes signaux à envoyer aux paires torsadées (102).

7. Appareil selon la revendication 6, les unités hybrides (304) recevant les premiers signaux à recevoir via les paires torsadées (102), et envoyant les premiers signaux à recevoir à l'unité de sommation (303).

8. Appareil selon la revendication 6, l'appareil de communications (30) comprenant en outre une pluralité d'unités de transformation de tension, et un nombre d'unités de transformation de tension étant identique à un nombre d'unités hybrides (304) ;
une première extrémité de l'unité de transformation de tension étant connectée à une deuxième extrémité de l'unité hybride (304), et une deuxième extrémité de l'unité de transformation de tension étant connectée à la paire torsadée (102) ; et l'unité de transformation de tension étant configurée pour réaliser un traitement de transformation de tension sur les troisièmes signaux à envoyer.

9. Appareil selon la revendication 6, un nombre d'unités hybrides (304) étant supérieur ou égal à un nombre de deuxièmes ports de l'unité de commande frontale analogique (302), et le nombre de deuxièmes ports de l'unité de commande frontale analogique (302) étant supérieur ou égal à un nombre de troisièmes signaux à envoyer.

10. Système de communications, le système de communications comprenant deux appareils de communications (30) selon l'une quelconque des revendications 1 à 9 et une pluralité de paires torsadées (102), un appareil de communications (30) des deux appareils de communications (30) étant configuré pour envoyer un signal, l'autre appareil de communications (30) des deux appareils de communications (30) étant configuré pour recevoir un signal, et les paires torsadées (102) étant configurées pour transmettre les signaux.

11. Procédé de communication réalisé par un appareil de communications (30), l'appareil de communications (30) étant appliqué à un émetteur-récepteur, et l'appareil de communications (30) comprenant une unité frontale numérique (301) et une unité de commande frontale analogique (302), un premier port de l'unité frontale numérique (301) étant configuré pour recevoir un premier signal à envoyer, et un deuxième port de l'unité frontale numérique (301) étant connecté à un premier port de l'unité de commande frontale analogique (302), le procédé comprenant :
la réception, par l'unité frontale numérique (301), du premier signal à envoyer,
la réalisation, par l'unité frontale numérique (301), d'un traitement de modulation sur le premier signal à envoyer afin d'obtenir un deuxième signal à envoyer, et
l'envoi, par l'unité frontale numérique (301), du deuxième signal à envoyer à l'unité de commande frontale analogique (302) ;
une pluralité de deuxièmes ports de l'unité de commande frontale analogique (302) étant connectés à une pluralité de paires torsadées (102) de manière biunivoque ; et
le procédé comprenant en outre :
la réalisation, par l'unité de commande frontale analogique (302), d'un traitement de conversion et de duplication sur le deuxième signal à envoyer afin d'obtenir une pluralité de troisièmes signaux à envoyer ;
l'envoi, par l'unité de commande frontale analogique (302), de la pluralité de troisièmes signaux à envoyer à la pluralité de paires torsadées (102) via la pluralité de deuxièmes ports de l'unité de commande frontale analogique (302) de manière biunivoque ; et
l'envoi respectif de la pluralité de troisièmes signaux à envoyer via la pluralité de paires torsadées (102).

12. Procédé selon la revendication 11, le procédé comprenant en outre :
la réception d'une pluralité de premiers signaux à recevoir via la pluralité de paires torsadées (102), et l'addition de tensions de la pluralité de premiers signaux à recevoir afin d'obtenir un deuxième signal à recevoir ;
la réalisation d'un traitement de conversion analogique-numérique sur le deuxième signal à recevoir afin d'obtenir un troisième signal à recevoir ; et
la réalisation d'un traitement de démodulation sur le troisième signal à recevoir afin d'obtenir un quatrième signal à recevoir.

13. Procédé selon la revendication 12, la réalisation d'un traitement de conversion et de duplication sur le deuxième signal à envoyer afin d'obtenir une pluralité de troisièmes signaux à envoyer comprenant :
la réalisation séquentielle d'un traitement de conversion numérique-analogique, d'un traitement de duplication, et d'un traitement d'amplification sur le deuxième signal à envoyer afin d'obtenir la pluralité de troisièmes signaux à envoyer.

14. Procédé selon la revendication 12, la réalisation d'un traitement de conversion et de duplication sur le deuxième signal à envoyer afin d'obtenir une pluralité de troisièmes signaux à envoyer comprenant :
la réalisation séquentielle d'un traitement de conversion numérique-analogique, d'un traitement d'amplification, et d'un traitement de duplication sur le deuxième signal à envoyer afin d'obtenir la pluralité de troisièmes signaux à envoyer.

15. Procédé selon la revendication 12, l'envoi respectif de la pluralité de troisièmes signaux à envoyer via une pluralité de paires torsadées (102) comprenant :
la réalisation d'un traitement de transformation de tension sur la pluralité de troisièmes signaux à envoyer, et l'envoi respectif, via la pluralité de paires torsadées (102), d'une pluralité de troisièmes signaux à envoyer obtenus après le traitement de transformation de tension.
